# EUROPÄISCHE PATENTSCHRIFT

(11) **EP 4 377 230 B1**
(45) Veröffentlichungstag und Bekanntmachung des Hinweises auf die Patenterteilung: **10.09.2025**
(21) Anmeldenummer: 22761429.4
(22) Anmeldetag: 01.08.2022
(51) Int. Cl.: B65D 85/804

(54) **PORTIONSKAPSEL ZUR ZUBEREITUNG EINES GETRÄNKS**
CAPSULE FOR THE PREPARATION OF BEVERAGES
CAPSULE POUR LA PRÉPARATION DES BOISSONS

(30) Priorität: 30.07.2021 US 202163227708 P; 12.08.2021 DE 102021208859; 16.08.2021 DE 102021208958; 16.12.2021 DE 102021214547; 20.04.2022 US 202217724750
(43) Veröffentlichungstag der Anmeldung: 05.06.2024
(73) Patentinhaber: K-fee System GmbH, 51469 Bergisch Gladbach (DE)
(72) Erfinder: KRÜGER, Marc, 51467 Bergisch Gladbach (DE); EMPL, Günter, 51429 Bergisch Gladbach (DE)
(74) Vertreter: Kutzenberger Wolff & Partner
(86) Internationale Anmeldenummer: PCT/EP2022/071513
(87) Internationale Veröffentlichungsnummer: WO 2023/007027

(56) Entgegenhaltungen:
- WO-A1-2013/072239
- WO-A1-2015/055849
- GB-A- 2 523 775

## Beschreibung

### Stand der Technik

Die vorliegende Erfindung geht aus von einer Portionskapsel zur Zubereitung eines Getränks mit Hilfe einer Getränkeherstellungsmaschine, wobei die Portionskapsel ein Basiselement mit einem Hohlraum zum Aufnehmen eines Getränkerohmaterials und einen den Hohlraum verschließenden Kapseldeckel aufweist, wobei das Basiselement einen Kapselboden, einen umlaufenden Flansch und eine sich von dem Kapselboden zum umlaufenden Flansch erstreckende Kapselwandung umfasst, wobei der Kapseldeckel an dem Flansch befestigt ist, wobei die Portionskapsel ein insbesondere von einem Detektor der Getränkeherstellungsmaschine optisch detektierbares Merkmal aufweist.

Solche Portionskapseln sind aus dem Stand der Technik bekannt. Beispielsweise offenbart die Druckschrift WO 2016 / 186 488 A1 und eine solche gattungsgemäße Portionskapsel. Diese Portionskapsel ist dazu vorgesehen, in eine Brühkammer eingelegt zu werden, in welcher die Portionskapsel perforiert wird, um Brühflüssigkeit in Form heißen Wassers unter Druck in den Hohlraum einzuleiten. Durch Wechselwirkung zwischen dem eingeleiteten Wasser mit dem Getränkerohmaterial, insbesondere geröstetem und gemahlenem Kaffee, entsteht ein Getränk, welches die Portionskapsel durch weitere Perforationsstellen verlässt und in ein Gefäß gelangt.

Für jede Portionskapsel existiert in der Regel eine passende Getränkeherstellungsmaschine, welche zur Zubereitung von Getränken auf Grundlage der passenden Portionskapseln optimiert ist. Zur Vermeidung von Fehlfunktionen hat es sich bewährt, derartige Portionskapsel mit maschinell und optisch auslesbaren detektierbaren Merkmalen zu versehen, damit vor dem Beginn des Brühprozesses eine Prüfung stattfinden kann, ob die eingelegte Portionskapsel mit der Maschine kompatibel ist. Zudem kann ggf. ein passendes Brühprogramm für das in der Portionskapsel befindliche Getränkerohmaterial gestartet werden.

Aus den Druckschriften WO2013/072239 A1, EP 3 023 362 B1, WO 2020 / 201 487 A1 und US 10,800,600 B2 ist bekannt, solche optische detektierbaren Merkmale in Form von Barcodes oder Binärcodes auf den Flansch der Kapsel aufzudrucken.

### Offenbarung der Erfindung

Es ist eine Aufgabe der vorliegenden Erfindung eine Portionskapsel mit einem optisch detektierbaren Merkmal (im Nachfolgenden auch nur als Merkmal bezeichnet) eingangs genannter Art zur Verfügung zu stellen, welche eine Verbesserung gegenüber den aus dem zitierten Stand der Technik bekannten Lösungen darstellt. Insbesondere soll das detektierbare Merkmal während der Herstellung der Portionskapsel leichter auf die Portionskapsel aufzubringen sein. Zudem ist es wünschenswert, dass das Merkmal nicht nur von einem auf die Deckelfolie gerichteten Detektor auslesbar sein, so dass es für die Ausgestaltung der Getränkeherstellungsmaschine mehr Möglichkeiten gibt.

Die Aufgabe der vorliegenden Erfindung wird gelöst mit einer Portionskapsel nach Anspruch 1. Vorteilhafte Ausgestaltungen und Weiterbildungen der Erfindung sind den Unteransprüchen, sowie der folgenden Beschreibung unter Bezugnahme auf die Zeichnungen entnehmbar.

Es wird eine Portionskapsel zur Zubereitung eines Getränks mit Hilfe einer Getränkeherstellungsmaschine offenbart, wobei die Portionskapsel ein Basiselement mit einem Hohlraum zum Aufnehmen eines Getränkerohmaterials und einen den Hohlraum verschließenden Kapseldeckel aufweist, wobei das Basiselement einen Kapselboden, einen umlaufenden Flansch und eine sich von dem Kapselboden zum umlaufenden Flansch erstreckende Kapselwandung umfasst, wobei der Kapseldeckel an dem Flansch befestigt ist, wobei die Portionskapsel ein insbesondere von einem Detektor der Getränkeherstellungsmaschine optisch detektierbares Merkmal aufweist, wobei das optisch detektierbare Merkmal auf einer dem Flansch abgewandten Seite des Kapseldeckels angeordnet ist und wobei der Flansch und der Kapseldeckel zumindest teilweise optisch transparent ausgebildet sind.

Vorteilhafterweise kann das optisch detektierbare Merkmal somit auf einer dem Basiselement abgewandten Seite der Deckelfolie angeordnet sein, welche sich beispielsweise besonders einfach bedrucken lässt. Gleichzeitig ist aber eine Auslesung des optisch detektierbaren Merkmals von der entgegengesetzten Seite der Kapsel, also durch den Flansch und die Deckelfolie hindurch möglich, da der Flansch und der Kapseldeckel zumindest im Bereich des optisch detektierbaren Merkmals optisch transparent ausgebildet sind. Beispielsweise ist das optisch detektierbare Merkmals somit, wenn es beispielsweise von Seiten der Deckelfolie aus hinterleuchtet wird, von einem auf der Seite des Basiselements angeordneten Detektor ausgelesen werden. Der Wortlaut optisch transparent bedeutet im Sinne der vorliegenden Erfindung insbesondere, dass das Material wenigstens ausreichend lichtdurchlässig (auch als transluzent oder teilweise transparent bezeichnet) ausgebildet ist, dass ein optisches Auslesen des Merkmals durch einen Detektor ermöglicht wird. Es muss daher insbesondere nicht 100% Transparenz für alle Wellenlängen des optischen Spektrums gegeben sein.

Vorzugsweise ist nur ein Randbereich des Kapseldeckels oder der gesamte Kapseldeckel optisch transparent ausgebildet. Denkbar ist, dass ein Zentralbereich des Kapseldeckels, welcher den Flansch nicht überdeckt, in bekannter Weise optisch ansprechend mit einem Logo oder einer Beschriftung oder dergleichen bedruckbar ist, während nur der Randbereich des Kapseldeckels, in welchem das Merkmal angeordnet ist und welcher den Flansch überdeckt optisch transparent ausgebildet ist. Alternativ ist der gesamte Kapseldeckel transparent ausgebildet.

Vorzugsweise ist zwischen dem Randbereich des Kapseldeckels und dem Flansch eine Klebeschicht angeordnet ist, durch welche der Randbereich und der Flansch stoffschlüssig miteinander verbunden sind, wobei die Klebeschicht optisch transparent ausgebildet ist. Vorteilhafterweise kann das Merkmal somit durch den Flansch, die Klebeschicht und die Deckelfolie hindurch von dem Detektor optisch ausgelesen werden.

Das optisch detektierbare Merkmal ist vorzugsweise bezogen auf eine Haupterstreckungsebene des Kapseldeckels in einem Randbereich des Kapseldeckels angeordnet. Das bedeutet, dass das Merkmal insbesondere in radialer Richtung gesehen in einem äußeren Randbereich des vorzugsweise runden Kapseldeckels angeordnet ist.

Vorzugsweise ist vorgehen, dass die Portionskapsel einen Ring aufweist, wobei das optische detektierbare Merkmal auf dem Ring angeordnet, insbesondere aufgedruckt ist, wobei der Ring auf dem Kapseldeckel angeordnet und insbesondere auf den Kapseldeckel aufgeklebt ist.

Vorzugsweise ist vorgehen, dass das Basiselement vollständig optisch transparent ausgebildet ist.

Vorzugsweise ist vorgehen, dass das Basiselement zweiteilig aus einem Basisteil und einem Flanschteil aufgebaut ist, wobei nur das Flanschteil optisch transparent ausgebildet ist, wobei das Basisteil und das Flanschteil miteinander verbunden sind.

Vorzugsweise ist vorgehen, dass das optisch detektierbare Merkmal ein maschinenauslesbarer Code, vorzugsweise ein eindimensionaler oder mehrdimensionaler Bit- oder Barcode ist.

Ein weiterer Gegenstand der vorliegenden Erfindung ist die Verwendung der oben genannten erfindungsgemäßen Portionskapseln zur Zubereitung eines Getränks mit Hilfe einer Getränkeherstellungsmaschine.

Gemäß einer bevorzugten Ausführungsform der vorliegenden Erfindung ist vorgesehen, dass das Basiselement aus Kunststoff gefertigt ist. Vorzugsweise wird das Basiselement durch Kalt- oder Warmverformung, insbesondere Tiefziehen hergestellt. Die Ausgestaltung des Basiselements mit Hohlraum wird vorzugsweise durch Thermoformen, beispielsweise Tiefziehen mittels Unterdruck, Überdruck und/oder einem beweglichen Stempel, erzeugt. Alternativ wird die Portionskapsel mittels Spritzgussverfahren, insbesondere im Einkomponenten-, Mehrkomponenten- oder In-Mold-Verfahren, hergestellt.

Das Basiselement ist vorzugsweise aus Polyethylen (PE), Polypropylen (PP), Polyvinylchlorid (PVC), Polymethylmetacrylat (PMMA), Polycarbonat (PC), Polystyrol (PS), Polyphenylenether (PPO) oder Polyethylenterephthalat (PET) ausgebildet ist.

Die Deckelfolie ist vorzugsweise aus Polyethylen (PE), Polypropylen (PP), Polyvinylchlorid (PVC), Polymethylmetacrylat (PMMA), Polycarbonat (PC), Polystyrol (PS), Polyphenylenether (PPO) oder Polyethylenterephthalat (PET) ausgebildet ist.

Denkbar ist, dass die Deckelfolie und das Basiselement aus dem gleichen Material bestehen.

Das Basiselement ist bevorzugt kegelstumpfförmig, kegelfrömig, zylinderförmig, sphärisch, hemisphärisch, elliptisch oder teilelliptisch ausgebildet. Das Basiselement ist vorzugsweise starr oder halbstarr ausgebildet. Der durch das Basiselement gebildete Hohlraum dient der Aufnahme von Getränkerohmaterial, beispielsweise Kaffeeröstgranulat, Instantkaffee, Schokoladenpulver, Teeverschnitt, Milchpulver und/oder dergleichen. Die Deckelfolie ist insbesondere plan oder nahezu plan ausgebildet, zumindest unmittelbar nach Verschließen der abgefüllten Portionskapsel durch die Deckelfolie. Etwaige Bombierungen der Deckelfolie im Laufe der Zeit durch ein Ausgasen von Kaffeepulver führen nicht dazu, dass die Deckelfolie nicht plan im Sinne der vorliegenden Erfindung ist, da diese Bombierung typischerweise erst nach einiger Zeit nach Abfüllung der Portionskapsel auftreten.

Die Deckelfolie umfasst vorzugsweise eine Kunststoff-Aluminium-Verbundfolie oder eine Kunststofffolie oder eine Mehrschicht-Kunststofffolie. Denkbar ist, dass die Portionskapsel rotationssymmetrisch um ihre Längsachse ausgebildet ist. Die Längsachse bilden somit eine zentral Rotationssymmetrieachse, welche mittig durch die Portionskapsel und dabei insbesondere im Wesentlichen senkrecht zu einer Haupterstreckungsebene der Deckelfolie verläuft. Der Flansch des Basiselements verläuft bevorzugt in einem Winkel zwischen 70 bis 110 Grad, besonders bevorzugt von 80 bis 100 Grad und ganz besonders bevorzugt von im Wesentlichen 90 Grad zur Rotationssymmetrieachse. Der Flansch ist insbesondere geschlossen, umlaufend ausgebildet. Das freie, äußere Ende des Flansches weist vorzugsweise einen Wulst, eine Bördelung oder einen sogenannten Rollrand auf, um Verletzungen des Benutzers an dem scharfkantigen Ende zu vermeiden.

Die Portionskapsel kann eine oder mehrere Getränkesubstanzen enthalten. Bei der einen oder den mehreren Getränkesubstanzen kann es sich um eine Flüssigkeit, einen Sirup, einen Feststoff, ein Pulver, Kaffee- oder Kakaosatz, Teeblätter oder eine Kombination davon handeln. Die eine oder die mehreren Getränkesubstanzen können in einer Getränkeherstellungsmaschine und/oder einem Getränkesystem verdünnt oder extrahiert werden, um ein Getränk herzustellen.

Die Portionskapsel kann jedes der hier beschriebenen und/oder abgebildeten optisch detektierbaren Merkmale und/oder Elemente umfassen. Jedes der hierin beschriebenen Merkmale und/oder Elemente kann zur Herstellung einer Portionskapsel kombiniert werden. Jedes der hierin beschriebenen Merkmale und/oder Elemente kann dupliziert werden, um eine Portionskapsel herzustellen. Jedes der hierin beschriebenen Merkmale und/oder Elemente kann eliminiert oder weggelassen werden, um eine Portionskapsel herzustellen. Jedes der hierin offenbarten Merkmale kann auf jedem der hierin aufgeführten Elemente oder Oberflächen neu angeordnet werden. Zum Beispiel kann ein Merkmal oder Element, das als auf dem Flansch der Portionskapsel befindlich angegeben ist, auch oder stattdessen auf dem Deckel oder dem Basiselement angeordnet sein.

Die Portionskapsel kann einen Körper oder ein Basiselement haben. Der Körper oder das Basiselement kann ein Behältnis sein oder einen oder mehrere Hohlräume bilden, in denen die Getränkesubstanz und/oder ein oder mehrere Elemente aufgenommen und/oder gelagert werden. Der Körper oder das Basiselement kann eine Seitenwand mit abgerundeten, gewölbten oder halbkugelförmigen Oberflächen aufweisen. Der Körper oder das Basiselement kann eine Seitenwand mit geradlinigen, ebenen oder sich verjüngenden Flächen aufweisen. Der Körper oder das Basiselement kann eine Seitenwand mit Oberflächen haben, die eine Halbkugel, eine Kuppel, einen Kegel oder einen Kegelstumpf bilden. Das Basiselement kann eine Bodenfläche haben. Die Bodenfläche kann abgerundet sein oder eine Halbkugelform haben. Die Bodenfläche kann allgemein flach oder plan sein. Die Bodenfläche kann eine oder mehrere Einbuchtungen aufweisen. Weist der Boden mehr als eine Vertiefung auf, können die beiden oder mehr Vertiefungen konzentrisch sein oder ineinander liegen. Die Bodenfläche kann gegenüber der Seitenwand abgewinkelt oder geneigt sein.

Die Portionskapsel kann einen Flansch haben. Der Flansch und das Basiselement können aus einem oder mehreren integralen Materialien bestehen. Der Flansch und das Basiselement können aus einem oder mehreren separaten Materialien gebildet und dann durch einen Fügeprozess miteinander verbunden werden. Beispielsweise können der Flansch und das Basiselement mit einem Klebstoff, einer Dichtung oder einer anderen geeigneten Verbindungsmethode verbunden werden. Der Flansch kann aus demselben Material bestehen wie das Basiselement und/oder der Deckel. Der Flansch kann aus einem anderen Material bestehen als das Basiselement und/oder der Deckel. Der Flansch kann eine ringförmige Form haben, die sich zumindest teilweise um den gesamten Umfang des Basiselements erstreckt. In bestimmten Ausführungsformen kann sich der Flansch jedoch auch nur um einen Teil des Umfangs des Basiselements erstrecken. In einigen Fällen kann der Flansch aus zwei oder mehr Laschen bestehen, die sich von dem Basiselement aus erstrecken. Der Flansch kann sich von dem Basiselement oder der Seitenwand des Basiselements nach außen erstrecken oder hervorstehen. Der Flansch kann sich in einem Winkel vom Basiselement aus erstrecken, so dass ein Winkel zwischen der oberen Fläche des Flansches und der Seitenwand der Kapsel ein spitzer Winkel (weniger als 90 Grad) ist. Der Flansch kann sich in einem Winkel vom Basiselement aus erstrecken, so dass ein Winkel zwischen der Oberseite des Flansches und der Seitenwand der Kapsel ein stumpfer Winkel (weniger als 90 Grad) ist. Der Flansch kann sich in einem Winkel vom Basiselement aus erstrecken, so dass ein Winkel zwischen der Oberseite des Flansches und der Seitenwand der Kapsel etwa ein rechter Winkel (etwa 90 Grad) ist.

Der Flansch kann sich an der Oberseite des Basiselements befinden. Der Flansch kann sich an der Unterseite des Basiselements befinden. Der Flansch kann sich in einem Bereich zwischen der unteren Oberfläche und der unteren Oberfläche des Basiselements befinden. Der Flansch kann sich näher an der Oberseite als an der Unterseite des Basiselements befinden oder umgekehrt.

Die Portionskapsel kann mit einem Deckel (auch als Kapseldeckel bezeichnet) versehen sein. Der Deckel kann den Hohlraum oder das Basiselement verschließen oder abdichten, nachdem die Getränkezutat hinzugefügt oder in den Hohlraum eingebracht wurde. Der Deckel kann eine luftdichte oder hermetische Abdichtung erzeugen, um die Frische der Getränkezutat zu erhalten. Der Deckel kann eine nicht luftdichte oder nicht hermetische Abdichtung bewirken. Der Deckel kann eine Dichtung erzeugen, so dass Luft und Feuchtigkeit daran gehindert werden, in den Hohlraum oder die Kapsel einzudringen und/oder sie zu verlassen. Der Deckel kann an der Portionskapsel, am Basiselement, an der Oberseite des Basiselements, an der Unterseite des Basiselements, am Flansch, an der Oberseite des Flansches, an der Unterseite des Flansches oder an einer Kombination davon befestigt werden. Der Deckel kann durch Kleben, Schweißen oder eine andere geeignete Befestigungsmethode oder -vorrichtung angebracht werden. Der Deckel kann aus dem gleichen Material wie das Basiselement und/oder der Flansch bestehen. Der Deckel kann aus einem anderen Material als das Basiselement und/oder der Flansch hergestellt sein. Der Deckel, der Flansch und/oder das Basiselement können aus einem oder mehreren integralen Materialien bestehen. Der Deckel, der Flansch und/oder das Basiselement können aus einem oder mehreren separaten Materialien bestehen und dann durch einen Fügeprozess miteinander verbunden werden. Zum Beispiel können der Deckel, der Flansch und/oder das Basiselement mit einem Klebstoff, einer Dichtung, einem Schweißverfahren oder einer anderen geeigneten Verbindungsmethode verbunden werden.

Die Portionskapsel, der Körper oder das Basiselement, der Flansch und/oder der Deckel können aus einem Material bestehen, das für die Herstellung eines Getränks und/oder für die Lagerung von Zutaten für die Getränkeherstellung geeignet ist. Die Portionskapsel, das Basiselement, der Flansch und/oder der Deckel können aus einem Nicht-Metall bestehen. Die Portionskapsel, das Basiselement, der Flansch und/oder der Deckel können aus einem recycelten Material hergestellt sein. Die Portionskapsel, das Basiselement, der Flansch und/oder der Deckel können aus einem wiederverwertbaren Material hergestellt sein. Die Portionskapsel, das Basiselement, der Flansch und/oder der Deckel können aus einem biologisch abbaubaren Material hergestellt sein. Die Portionskapsel, das Basiselement, der Flansch und/oder der Deckel können aus einem Papiermaterial hergestellt sein. Die Portionskapsel, das Basiselement, der Flansch und/oder der Deckel können aus einem kompostierbaren Material hergestellt sein. Die Portionskapsel, das Basiselement, der Flansch und/oder der Deckel können aus einem zellulosehaltigen Material hergestellt sein. Die Portionskapsel, das Basiselement, der Flansch und/oder der Deckel können aus einem Material hergestellt sein, das Polymilchsäure enthält. Die Portionskapsel, das Basiselement, der Flansch und/oder der Deckel können aus einem Material hergestellt sein, das der Verformung, der Auflösung und dem Zusammenbruch bei Temperaturen bis zu mindestens 120 °C oder mehr oder weniger standhält. Die Portionskapsel, das Basiselement, der Flansch und/oder der Deckel können aus einem Material hergestellt sein, das aus Mais gewonnen wird. Die Portionskapsel, das Basiselement, der Flansch und/oder der Deckel können aus einem Material auf Pflanzenbasis hergestellt sein. Die Portionskapsel, das Basiselement, der Flansch und/oder der Deckel können aus einem Material hergestellt sein, das frei von Polystyrol ist. Die Portionskapsel, das Basiselement, der Flansch und/oder der Deckel können aus einem Material hergestellt sein, das lebensmittelecht ist. Die Portionskapsel, das Basiselement, der Flansch und/oder der Deckel können durch Spritzgießen, Thermoformen, Ziehen oder dergleichen hergestellt werden. Das Basiselement, der Flansch und/oder der Deckel können laminiert sein. Die Portionskapsel, das Basiselement, der Flansch und/oder der Deckel können aus einem elektrisch leitfähigen Material hergestellt sein. Die Portionskapsel, das Basiselement, der Flansch und/oder der Deckel können aus einem elektrisch nicht leitenden Material hergestellt sein. Die Portionskapsel, das Basiselement, der Flansch und/oder der Deckel können aus einem Gewebematerial hergestellt sein. Die Portionskapsel, das Basiselement, der Flansch und/oder der Deckel können aus einem Gummimaterial hergestellt sein. Die Portionskapsel, das Basiselement, der Flansch und/oder der Deckel können aus einem Kunststoffmaterial hergestellt sein. Die Portionskapsel, das Basiselement, der Flansch und/oder der Deckel können aus Aluminium hergestellt sein. Die Portionskapsel, das Basiselement, der Flansch und/oder der Deckel können aus einem Material bestehen, das elastisch oder verformbar ist. Das Basiselement, der Flansch und/oder der Deckel können aus einem verformbaren Material bestehen, das verschiedenen Flüssigkeitstemperaturen (heiß und kalt) und -drücken standhalten kann, ohne Schaden zu nehmen (d. h. ohne dass das Basiselement, der Flansch und/oder der Deckel in unerwünschten Bereichen reißt oder bricht). Die Portionskapsel, das Basiselement, der Flansch und/oder der Deckel können eine im Allgemeinen gleiche Wandstärke haben. Die Portionskapsel, das Basiselement, der Flansch und/oder der Deckel können eine unterschiedliche Wandstärke haben. Zum Beispiel kann die Portionskapsel, das Basiselement, der Flansch und/oder der Deckel in bestimmten Bereichen eine dickere Wandstärke aufweisen, um eine Zerstörung der Portionskapsel während der Handhabung und/oder des Gebrauchs zu verhindern.

Die Portionskapsel kann ein oder mehrere Kapselmerkmale aufweisen. Bei dem einen oder den mehreren Kapselmerkmalen kann es sich um einen oder mehrere Vorsprünge, Grate, Erhebungen und/oder Konvexitäten handeln, die sich von der Außenfläche des Basiselements weg erstrecken oder über diese hinausragen. Bei dem einen oder den Kapselmerkmalen kann es sich um einen oder mehrere Kanäle, Rillen, Vertiefungen, Täler oder Konkavitäten handeln, die sich von der Außenfläche in das Basiselement hinein erstrecken oder vorstehen. Das eine oder die mehreren Kapselmerkmale können sich um den gesamten Umfang des Körpers oder des Basiselements erstrecken. Das eine oder die mehreren Kapselmerkmale können sich auch nur um einen Teil oder einen Bereich des Umfangs des Körpers oder des Basiselements erstrecken. Das eine oder die mehreren Oberflächenkapselmerkmale können sich kontinuierlich um den Körper oder das Basiselement herum erstrecken. Das eine oder die mehreren Kapselmerkmale können sich intermittierend (Anfang und Ende) um den Körper oder das Basiselement herum erstrecken. Das eine oder die mehreren Kapselmerkmale können sich nur auf dem Basiselement befinden. Das eine oder die mehreren Kapselmerkmale können sich nur auf dem Deckel befinden. Das eine oder die mehreren Kapselmerkmale können nur auf dem Flansch angeordnet sein. Das eine oder die mehreren Kapselmerkmale können sich nicht auf dem Körper, dem Flansch, dem Deckel oder einer Kombination davon befinden. Das eine oder die mehreren Kapselmerkmale können sich auf der Innenfläche des Basiselements befinden. Das eine oder die mehreren Kapselmerkmale können auf der Außenfläche des Grundelements angeordnet sein. Das eine oder die mehreren Kapselmerkmale können auf der Oberseite des Flansches, der Unterseite des Flansches, der Seitenfläche des Flansches oder einer Kombination davon angeordnet sein. Bei dem einen oder den mehreren Kapselmerkmalen kann es sich um einen oder mehrere Ringe handeln, die sich um den gesamten oder einen Teil des Umfangs der Portionskapsel erstrecken. Das eine oder die mehreren Merkmale der Portionskapsel können diagonal sein oder sich in einer Diagonale oder einem Winkel relativ zu einer zentralen Längsachse der Portionskapsel erstrecken. Die ein oder mehreren Kapselmerkmale können unregelmäßige Formen, wie Schnörkel oder Wirbel, aufweisen. Das eine oder die mehreren Kapselmerkmale können vertikal ausgerichtet sein (von der Oberseite zur Unterseite des Basiselements). Das eine oder die mehreren Kapselmerkmale können sich auf den Flansch erstrecken (Oberseite, Unterseite und/oder Seitenfläche des Flansches). Das eine oder die mehreren Kapselmerkmale können sich nicht auf den Flansch erstrecken. Das eine oder die mehreren Kapselmerkmale können sich vom Flansch bis zur Bodenfläche des Basiselements erstrecken. Das eine oder die mehreren Kapselmerkmale können sich von dem Flansch in Richtung der Bodenfläche des Basiselements erstrecken, dürfen sich aber nicht bis zur Bodenfläche erstrecken. Das eine oder die mehreren Kapselmerkmale können sich von der unteren Oberfläche des Basiselements zur oberen Oberfläche des Basiselements erstrecken, dürfen sich aber nicht bis zur oberen Oberfläche erstrecken. Der Abstand zwischen benachbarten Kapselmerkmalen kann gleichmäßig sein. Mit anderen Worten, der Abstand zwischen einigen oder allen Kapselmerkmalen kann im Wesentlichen gleich sein. Die Abstände zwischen benachbarten Kapselmerkmalen können unterschiedlich sein. Mit anderen Worten, der Abstand zwischen einigen oder allen Kapselmerkmalen kann unterschiedlich sein. Das eine oder die mehreren Kapselmerkmale können eine Zebraform oder einen Zebraaufdruck haben. Dies kann bedeuten, dass sich das eine oder die mehreren Kapselmerkmale entlang mindestens eines Teils (oder der Gesamtheit) des Körpers oder des Basiselements, des Deckels und/oder des Flansches erstrecken. Das eine oder die mehreren Kapselmerkmale können in bestimmten Bereichen verblassen oder weniger sichtbar sein, während sie in anderen Bereichen intensiver oder besser sichtbar sind. Zum Beispiel kann sich die Sichtbarkeit des einen oder der mehreren Kapselmerkmale ändern. Zum Beispiel kann die Tiefe einer Vertiefung oder Rille in bestimmten Bereichen des Basiselements, des Deckels und/oder des Flansches flacher oder tiefer werden. Zum Beispiel kann die Höhe oder der Vorsprung einer Rippe oder eines Grates in bestimmten Bereichen des Basiselements, des Flansches und/oder des Deckels größer oder kleiner sein als in anderen Bereichen des Basiselements, des Flansches und/oder des Deckels.

Das eine oder die mehreren Kapselmerkmale können sich nur an der Außenfläche der Seitenwand oder des Körpers befinden. Das eine oder die mehreren Kapselmerkmale können sich nur auf der Innenfläche der Seitenwand oder des Körpers befinden. Das eine oder die mehreren Kapselmerkmale können sich sowohl an der Innen- als auch an der Außenfläche der Seitenwand oder des Körpers befinden. Das eine oder die mehreren Kapselmerkmale, die sich auf der Außenfläche befinden, können dem einen oder den mehreren Kapselmerkmalen entsprechen, die sich auf der Innenfläche des Kapselkörpers befinden. Zum Beispiel kann eine Rille auf der Außenfläche des Kapselkörpers eine Rippe oder einen Vorsprung auf der Innenfläche der Seitenwand bilden, oder andersherum. Zum Beispiel kann eine Rille auf der Oberseite des Flansches oder Deckels eine Rippe oder einen Vorsprung auf der Unterseite des Flansches oder Deckels bilden, oder umgekehrt.

Die ein oder mehreren Kapselmerkmale, die sich auf einer Innenfläche oder im Inneren des Hohlraums befinden, können dazu dienen, den Flüssigkeitsstrom des Getränks in und/oder durch das Basiselement zu verändern oder zu unterbrechen. Das eine oder die mehreren Kapselmerkmale können dazu dienen, eine turbulente Flüssigkeitsströmung in und/oder durch die Kapsel zu bewirken oder zu erzeugen. Das eine oder die mehreren Kapselmerkmale können dazu dienen, eine laminare Flüssigkeitsströmung in und/oder durch die Kapsel hervorzurufen oder zu erzeugen. Das eine oder die mehreren Kapselmerkmale können dazu dienen, einen Wirbel der Flüssigkeit in und/oder durch die Kapsel zu erzeugen. Das eine oder die mehreren Kapselmerkmale können bewirken, dass sich die in die und durch die Kapsel fließende Flüssigkeit nach oben und/oder unten bewegt, um den Getränkebestandteil in der Kapsel zu extrahieren und/oder aufzulösen.

Die Portionskapsel kann mit einer Tinte beschichtet werden, mit einem Material, das der Portionskapsel ein metallisches Aussehen verleiht, das aus einer Tinte oder metallischen Flocken oder metallischen Partikeln oder Pigmenten hergestellt werden kann. Die Partikel können in einem wässrigen Medium suspendiert oder dispergiert werden und dann auf das Basiselement, den Deckel und/oder den Flansch aufgebracht werden. Es ist möglich, dass die Partikel oder Pigmente in den Kunststoff eingebracht werden, wenn sich der Kunststoff in einem geschmolzenen oder erweichten Zustand befindet, um das Metallische bereitzustellen. Beispielsweise kann dem Kunststoff ein Aluminiumflockenmaterial hinzugefügt werden, um ihm ein einzigartiges Aussehen zu verleihen und/oder um Herstellungswirbel oder Defekte zu verbergen, die infolge von

Das eine oder die mehreren Kapselmerkmale können integral auf dem Kapselkörper oder der Basis, dem Deckel und/oder dem Flansch ausgebildet sein. Das eine oder die mehreren Kapselmerkmale können dem Kapselkörper oder der Basis, dem Deckel und/oder dem Flansch hinzugefügt werden. Die ein oder mehreren Kapselmerkmale können auf den Kapselkörper oder die Basis, den Deckel und/oder den Flansch aufgedruckt oder angebracht sein. Das eine oder die mehreren Kapselmerkmale können aus demselben Material wie der Kapselkörper, der Flansch und/oder der Deckel geformt oder hergestellt sein. Das eine oder die mehreren Kapselmerkmale können aus einem anderen Material als der Kapselkörper, der Flansch und/oder der Deckel geformt oder hergestellt sein. Das eine oder die mehreren Kapselmerkmale können auf den Kapselkörper, den Flansch und/oder den Deckel gedruckt, geprägt, geätzt, aufgeklebt oder angebracht werden.

Die ein oder mehreren Kapselmerkmale können geklebt, geschweißt oder auf andere Weise an der Kapselbasis befestigt werden.

Bei dem einen oder den mehreren Kapselmerkmalen kann es sich auch um das eine oder die mehreren optisch erkennbaren Merkmale handeln. In dieser Hinsicht können das eine oder die mehreren Kapselmerkmale einem oder mehreren hierin offengelegten Zwecken oder Funktionen dienen. Alternativ können die ein oder mehreren Kapselmerkmale nur die Funktion oder den Zweck eines optisch erkennbaren Merkmals erfüllen.

Die Portionskapsel kann ein oder mehrere optisch erkennbare Merkmale aufweisen. Das eine oder die mehreren optisch detektierbaren Merkmale können sich auf der Portionskapsel, dem Körper oder Basiselement, der Seitenwand, der Außenfläche der Seitenwand, der Innenfläche der Seitenwand, dem Flansch, der Oberseite des Flansches, der Unterseite des Flansches, der Seitenfläche des Flansches, dem Deckel, der Oberseite des Deckels, der Unterseite des Deckels, der Seitenfläche des Deckels oder einer Kombination davon befinden.

Die ein oder mehreren optisch detektierbaren Merkmale können von einem oder mehreren Detektoren der Getränkemaschine und/oder des Systems gelesen, detektiert, erkannt und/oder identifiziert werden. Bei dem einen oder den mehreren Detektoren kann es sich um einen oder mehrere Laser, Lichter, Lichtvorhänge, Scanner, Leser, Augen, Kameras, Strichcodeleser, Bitcodeleser oder eine Kombination davon handeln. Nachdem die Portionskapsel in die Getränkemaschine eingeführt wurde, können der eine oder die mehreren Detektoren über der Portionskapsel, unter der Portionskapsel, neben der Portionskapsel oder einer Kombination davon angeordnet sein. Der eine oder die mehreren Detektoren können einen oder mehrere Prozessoren, Speicher, Programme, Festplatten, Ram oder andere Computerhardware und - software enthalten oder mit diesen in elektronischer Verbindung stehen. Der eine oder die mehreren Detektoren können so funktionieren, dass sie das eine oder die mehreren optisch erkennbaren Merkmale lesen, identifizieren und/oder mit einer oder mehreren gespeicherten Referenzen korrelieren. Eines oder mehrere der gelesenen optisch erkennbaren Merkmale können auf einer Festplatte, in einem Speicher oder in einer Cloud des Detektors, der Getränkemaschine oder in beiden gespeichert werden. Der eine oder die mehreren Detektoren können so funktionieren, dass sie das eine oder die mehreren optisch erkennbaren Merkmale lesen, identifizieren und/oder mit einer oder mehreren gespeicherten Referenzen korrelieren, um den Typ der Portionskapsel zu bestimmen. Zum Beispiel können der eine oder die mehreren Detektoren erkennen, ob die Portionskapsel Kaffee, Espresso, Kakao, alkoholische oder alkoholfreie Getränkezutaten oder Zutaten zur Maschinenreinigung enthält. Beispielsweise kann der eine oder die mehreren Detektoren erkennen, ob die Portionskapsel warmes, kaltes oder umgebendes Wasser oder eine andere Flüssigkeit (Milch, Saft usw.) benötigt, um das gewünschte Getränk herzustellen. Beispielsweise können der oder die Detektoren die Maschinenparameter zur Herstellung des gewünschten oder beabsichtigten Getränks ermitteln, wie z. B. die Flüssigkeitstemperatur, den Flüssigkeitsdruck, die Flüssigkeitsmenge, die Erhitzungs- oder Abkühlungszeit und/oder -temperatur, ob zusätzliche Zutaten oder Flüssigkeiten mit dem Getränk gemischt werden müssen oder ob sie durch die Portionskapsel laufen müssen. Die ein oder mehreren Detektoren können in der Lage sein, die Maschinenparameter für die Reinigung der Getränkemaschine zu identifizieren, wenn der Detektor erkennt, dass die Kapsel für die Reinigung der Maschine bestimmt ist. Der eine oder die mehreren Detektoren können so funktionieren, dass sie ein inkompatibles optisch detektierbares Merkmal erkennen, wenn eine Portionskapsel in die Maschine eingeführt wird, die nicht für die Verwendung in der Maschine vorgesehen ist. Dies kann vorteilhafterweise verhindern, dass ein Fehler auftritt, die Maschine beschädigt und/oder ein Bediener oder Unbeteiligter verletzt wird.

Das eine oder die mehreren optisch erkennbaren Merkmale können eines oder mehrere sein: Farben, Muster, Logos, Strichcodes (2-dimensional und/oder 3-dimensional), Bitcodes, Binärcode, Vertiefungen, Einkerbungen, Erhebungen, Vorsprünge, Erhebungen. Das eine oder die mehreren optisch erkennbaren Merkmale können für das menschliche Auge sichtbar sein. Das eine oder die mehreren optisch erkennbaren Merkmale können für das menschliche Auge unsichtbar sein. Das eine oder die mehreren optisch detektierbaren Merkmale können Rippen, Vorsprünge, Erhebungen, Noppen, Abstandshalter, Widerhaken, Öffnungen, Löcher, Vertiefungen, Rillen und Vertiefungen umfassen. Bei dem einen oder den mehreren optisch erkennbaren Merkmalen kann es sich um ein oder mehrere Bilder, Muster, Linien oder Rillen handeln. Das eine oder die mehreren optisch erkennbaren Merkmale können flach oder eindimensional sein. Das eine oder die mehreren optisch erkennbaren Merkmale können dreidimensional sein.

Die Getränkemaschine kann einen oder mehrere Detektoren enthalten. Der eine oder die mehreren Detektoren können elektrisch (drahtgebunden oder drahtlos) mit einem Systemnetzwerk verbunden sein. Der eine oder die mehreren Detektoren können Informationen über die Verwendung der Portionskapsel in der Maschine an das Systemnetzwerk übermitteln.

Die Informationen können von einem oder mehreren optisch erkennbaren Merkmalen und/oder der Maschine gesammelt und dann an ein Systemnetzwerk übertragen werden. Die gesammelten und übermittelten Informationen können einem Lieferanten oder Hersteller der Portionskapseln und/oder Maschinen oder einem Servicetechniker helfen, Probleme mit der Portionskapsel und/oder der Maschine zu erkennen. Die gesammelten und übertragenen Informationen können einem Lieferanten oder Hersteller der Portionskapseln und/oder - maschinen helfen, die Gewohnheiten der Verbraucher vorherzusagen, den Verbrauch zu bestimmen, Bestellungen zu erstellen, den Lagerbestand zu verwalten, ein Kundenbindungsprogramm zu erstellen, Informationen über die Vorlieben der Verbraucher zu sammeln, Daten zu generieren und zu analysieren, die Produktion, die Herstellung und den Versand auf der Grundlage des Verbrauchs der Verbraucher vorherzusagen. Das Systemnetzwerk kann sich überall auf der Welt befinden, einschließlich im selben Staat oder Land wie die Getränkemaschine und/oder der Benutzer, oder in einem anderen Staat oder Land.

Die vorliegende Lehre sieht ein Verfahren zur Rückgewinnung und/oder Kompostierung einer Portionskapsel, des Deckels, des Filters oder einer Kombination davon vor. Das Verfahren kann das Abtrennen eines oder mehrerer Elemente (falls vorhanden) aus der Portionskapsel, das Abtrennen des Deckels von der Portionskapsel und das Kompostieren eines oder mehrerer der Basiselemente und/oder des Deckels umfassen. Das Verfahren kann einen Schritt der Kompostierung der gesamten Portionskapsel einschließlich des Deckels, des Filters (falls vorhanden) und/oder des Bodens umfassen.

Weitere Einzelheiten, Merkmale und Vorteile der Portionskapsel ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Portionskapsel, welche den wesentlichen Erfindungsgedanken nicht einschränken.

### Kurze Beschreibung der Zeichnungen

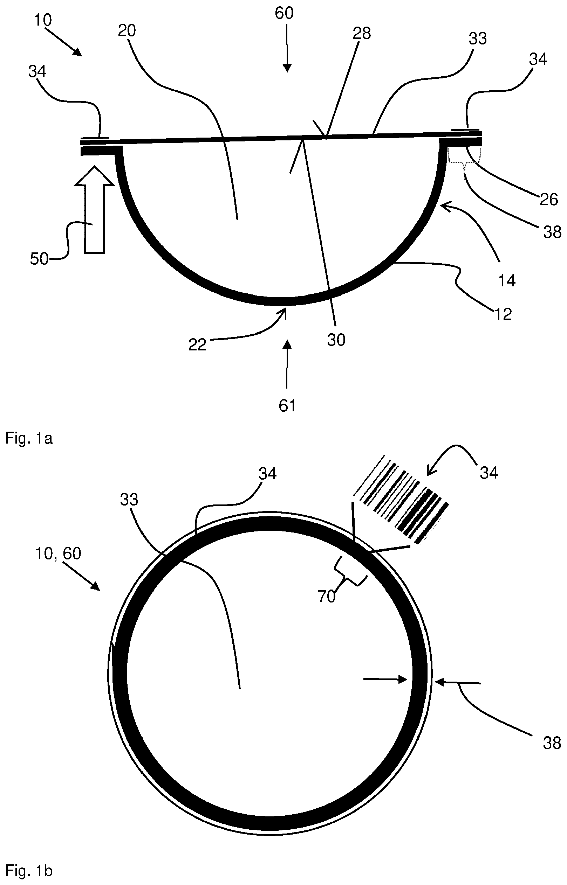

- **Figur 1a**: zeigt eine schematische Schnittbildansicht einer Portionskapsel gemäß einer beispielhaften Ausführungsform der vorliegenden Erfindung.
- **Figur 1b**: zeigt eine schematische Draufsicht "von oben" auf die Portionskapsel gemäß der beispielhaften Ausführungsform der vorliegenden Erfindung.

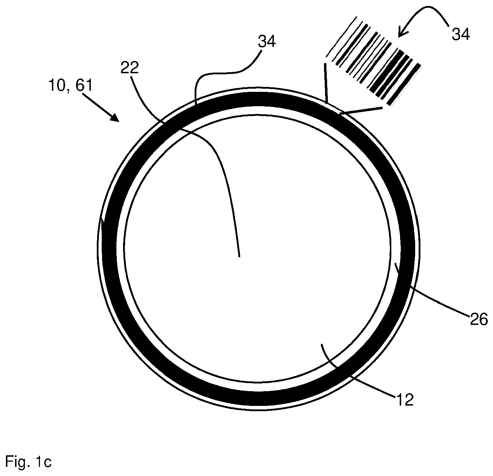

- **Figur 1c**: zeigt eine schematische Draufsicht "von unten" auf die Portionskapsel gemäß der beispielhaften Ausführungsform der vorliegenden Erfindung.

### Ausführungsformen der Erfindung

In **Figur 1** ist eine schematische Seitenansicht einer Portionskapsel 10 zur Zubereitung eines Getränks offenbart.

Die Portionskapsel 10 weist ein Basiselement 12 auf (auch als Körper bezeichnet). Der Körper oder das Basiselement 12 umfasst eine Seitenwand 14 (auch als Kapselwand bezeichnet). Die Seitenwand 12 erstreckt sich von einem Bodenbereich 22 (auch als Kapselboden bezeichnet) bis zu einem umlaufenden Flansch 26, der seitlich absteht und insbesondere umlaufend ausgebildet ist. Das Basiselement 12 spannt einen Hohlraum 20 auf, welcher zum Aufnahmen von Getränkerohmaterial vorgesehen ist. Auf der dem Bodenbereich 22 abgewandten Seite weist das Basiselement eine Einfüllöffnung auf, durch welche der Hohlraum 20 mit dem Getränkerohmaterial befüllbar ist.

Die Portionskapsel 10 weist beispielhaft sphärisch ausgebildetes Basiselement 12 auf, welches an seiner geschlossenen Seite den Kapselboden 22 (der gewölbt ausgebildet sein kann und keinesfalls plan ausgebildet sein muss) und an seiner offenen Seite einen umlaufenden Flansch 26 aufweist. Zwischen dem Kapselboden 22 und dem Flansch 26 erstreckt sich die Kapselwandung 14 um den Hohlraum 20. Die Portionskapsel 10 ist um ihre zentrale Mittellängsachse rotationssymmetrisch aufgebaut. In radialer Richtung zu der zentralen Rotationssymmetrieachse steht der Flansch 26, der kreisförmig und somit in Umfangsrichtung umlaufend ausgebildet ist, nach außen über die Kapselwandung 14 vor.

Der Flansch 26 ist mit einem Kapseldeckel 33 (auch als Deckel oder Membran bezeichnet) in Form einer insbesondere kreisförmigen Deckelfolie fest verbunden, welche den Hohlraum 20 auf der offenen Seite des Basiselements 12 verschließt. Der Flansch 26 weist vorzugsweise hierfür eine dem Kapseldeckel 33 zugewandte Siegelebene auf, welche sich ungefähr rechtwinklig zur Rotationssymmetrieachse erstreckt. Der Kapseldeckel 33 ist in seinem Randbereich an den Flansch 26 und insbesondere auf die Siegelebene gesiegelt, geschweißt oder geklebt. Innerhalb des Basiselements 12 ist der Hohlraum 20 ausgebildet, welcher mit dem Getränkerohmaterial, beispielsweise Kaffeeröstgranulat, Instantkaffee, Schokoladenpulver, Teeverschnitt, Milchpulver und/oder dergleichen befüllt ist (aus Gründen der Übersichtlichkeit nicht illustriert) und welcher durch den Kapseldeckel 33 verschlossen ist.

Die Portionskapsel 10 ist dazu vorgesehen, in eine Brüheinheit einer Getränkeherstellungsmaschine eingeführt zu werden, um ein Getränk herzustellen. Die Brüheinheit umfasst ein erstens Brühkammerteil und ein zweites Brühkammerteil, wobei das erste oder das zweite Brühkammerteil relativ zum anderen Brühkammerteil zwischen einer angenäherten Position, in welcher das erste und das zweite Brühkammerteil eine geschlossene Brühkammer bilden, und einer offenen Position, in welcher das erste und das zweite Brühkammerteil zum Einsetzen oder Auswerfen der Portionskapsel 10 voneinander beabstandet sind, bewegbar, insbesondere verschwenkbar oder verschiebbar ist.

In der geschlossenen Position werden der Kapseldeckel 33 und/oder der Kapselboden 22 perforiert, um Perforationsöffnung zum Einbringen von Brühflüssigkeit oder zum Ausleiten des hergestellten Getränks zu erzeugen. Die Brühflüssigkeit wird unter Druck in den Hohlraum 20 eingeleitet. Durch die Wechselwirkung zwischen der Brühflüssigkeit und dem Getränkerohmaterial entsteht das gewünschte Getränk, welches die Portionskapsel 12 durch die Perforationsöffnungen verlässt und einem Getränkegefäß zugeführt wird. Durch ein optionales Filtermedium können etwaige Partikel des Getränkerohmaterials aus dem Getränk gefiltert und in der Portionskapsel 10 zurückgehalten werden. Vorzugsweise fungiert aber der mehrfach perforierte Kapseldeckel 33 als Filterelement.

Die Portionskapsel 10 weist nun ein insbesondere von einem Detektor der Getränkeherstellungsmaschine optisch detektierbares Merkmal 34 auf. Dieses Merkmal 34 dient vorzugsweise dazu, dass die Portionskapsel 10 in der Getränkeherstellungsmaschine zu identifizieren oder Brühparameter zu steuern. Somit kann von der Getränkeherstellungsmaschine beispielsweise verifiziert werden, ob es sich bei der in der Brühkammer befindlichen Portionskapsel 10 um eine systemkompatible Portionskapsel 10 handelt, und/oder ein passendes Brühprogramm für das in der Portionskapsel 10 befindliche Getränkerohmaterial automatisch ausgewählt und gestartet werden kann. Denkbar ist auch, dass konkret zu verwendende Brühparameter in das optisch detektierbare Merkmal 34 eingebettet sind und mittels des Detektors ausgelesen werden.

Das optisch detektierbare Merkmal 34 ist insbesondere ein auf die Deckelfolie 33 aufgebrachter maschinenauslesbarer Code in Form eines eindimensionalen oder mehrdimensionalen Bit- oder Barcode. Der Bit- oder Barcode ist dabei vollständig oder teilweise umlaufend als Kreis oder Teilkreis um die Rotationssymmetrieachse der Portionskapsel 10 ausgebildet. Die einzelnen benachbarten Striche, aus welchem der insbesondere zwei- oder mehrfarbige Bit- oder Barcode aufgebaut ist, erstrecken sich dann vorzugsweise in radialer Richtung bezogen auf die Rotationssymmetrieachse. Der Code ist dabei auf eine Oberseite 28 der Deckelfolie 33 aufgebracht, welche dem Flansch 26 abgewandt ist. Der Code befindet sich dabei insbesondere in einem umlaufenden Randbereich 38 der Deckelfolie 33, wobei insbesondere derjenige Teil der Deckelfolie 33 als Randbereich 38 bezeichnet wird, welcher an dem Flansch 26 befestigt ist und/oder mit dem Flansch 26 unmittelbar in Kontakt ist.

Der Code ist dabei entweder direkt im Randbereich auf die Oberseite 28 aufgedruckt oder auf einen (nicht dargestellten) Ring aufgebracht, welcher auf die Oberseite 28 aufgeklebt ist.

Damit der Code von einem Detektor der Getränkezubereitungsmaschine auslesbar ist, welcher "von unten", also entlang einer Richtung von Basiselement 12 in Richtung Deckelfolie 33, insbesondere parallel zur Rotationssymmetrieachse, auf den Flansch 26 der Portionskapsel 10 gerichtet ist (illustriert durch den Pfeil 50), ist die Deckelfolie 33 zumindest in Randbereich 38 und der Kapselkörper 12 zumindest im Bereich des Flansches 26 transparent ausgebildet. Der Wortlaut optisch transparent bedeutet, dass die Materialien wenigstens soweit lichtdurchlässig (auch als transluzent oder teilweise transparent bezeichnet) ausgebildet sind, dass der Detektor den Code optisch auslesen kann. Der Code kann hierfür in der Getränkezubereitungsmaschine hinterleuchtet werden.

Denkbar ist, dass die gesamte Deckelfolie 33 transparent ausgebildet ist oder nur im Randbereich, so dass in einem Zentralbereich, der in radialer Richtung innerhalb des Randbereichs 38 liegt, eine Bedruckung der Deckelfolie mit einem Logo, Produktbezeichnungen, Beschriftungen und dergleichen möglich sind.

Genauso kann entweder das gesamte Basiselement 12 transparent ausgebildet sein oder nur der Flansch 26 des Basiselements 12.

Um ein zumindest teilweise optisch transparentes Basiselement 12 und eine zumindest teilweise optische transparente Deckelfolie 33 zu erzielen, sind das Basiselement 12 und die Deckelfolie 33 vorzugsweise aus Polyethylen (PE), Polypropylen (PP), Polyvinylchlorid (PVC), Polymethylmetacrylat (PMMA), Polycarbonat (PC), Polystyrol (PS), Polyphenylenether (PPO) oder Polyethylenterephthalat (PET) gefertigt. Die topfförmige oder sphärische Ausgestaltung des Basiselements 12 wird vorzugsweise durch Thermoformen, beispielsweise Tiefziehen mittels Unterdruck, Überdruck und/oder einem beweglichen Stempel, erzeugt. Alternativ wird die Portionskapsel 10 mittels Spritzgussverfahren, insbesondere im Einkomponenten-, Mehrkomponenten- oder In-Mold-Verfahren, hergestellt. Als weitere Alternative wäre denkbar, dass das Basiselement 12 vollständig oder teilweise aus einen biologisch abbaubaren Material, insbesondere aus Cellulosefasern, die in eine Harzmatrix eingebettet sein können, hergestellt ist.

**In** **Figur** 1b ist eine schematische Draufsicht "von oben" auf die Portionskapsel 10 gemäß der beispielhaften Ausführungsform der vorliegenden Erfindung illustriert. Die Draufsicht erfolgt entlang des in Figur 1a gezeigten Pfeils 60. Insofern schaut man auf die Oberseite 28 der Deckelfolie 33 und kann dabei den auf die Deckelfolie 33 aufgebrachten und das optisch detektierbare Merkmal 34 darstellenden Code sehen.

Zur Darstellung des Bit- oder Barcodes ist ein Teilbereich 70 des Codes vergrößert und exemplarisch illustriert. Es ist zu sehen, dass es sich hierbei beispielhaft um einen Bit- oder Barcode mit quasiparallelen Strichen in radialer Richtung handelt.

In **Figur 1c** ist zeigt eine schematische Draufsicht "von unten" auf die Portionskapsel gemäß der beispielhaften Ausführungsform der vorliegenden Erfindung. Die Draufsicht erfolgt entlang des in Figur 1a gezeigten Pfeils 61. In dieser Perspektive ist insbesondere der Kapselkörper 12 und der Flansch 26 zu sehen. Aufgrund der Tatsache, dass zumindest der Flansch 26 transparent ausgebildet ist, schaut man hierbei auf eine der Oberseite 28 gegenüberliegende Unterseite 30 der Deckelfolie 33. Dadurch, dass aber auch zumindest der Randbereich 38 der Deckelfolie 33 optisch transparent ausgebildet ist, kann man in dieser Perspektive auch durch die Deckelfolie 33 hindurch den Code "von unten" durch den Flansch 26 und die Deckelfolie 33 erkennen, so dass auch der Detektor den Code aus dieser Perspektive (siehe Pfeil 50 in Figur 1a) auslesen kann.

### Bezugszeichenliste

- 10: Portionskapsel
- 12: Basiselement
- 14: Seitenwand des Basiselements
- 20: Hohlraum für Getränkerohmaterial
- 22: Bodenbereich des Basiselements
- 26: Flansch des Basiselements
- 28: Oberseite der Deckelfolie
- 30: Unterseite der Deckelfolie
- 33: Kapseldeckel / Deckelfolie
- 34: Optisch detektierbares Merkmal
- 38: Randbereich der Deckelfolie
- 50: Detektionsrichtung eines Detektors
- 60: Ansicht "von oben"
- 61: Ansicht "von unten"
- 70: Teilbereich des Codes

## Patentansprüche

1. Portionskapsel (10) zur Zubereitung eines Getränks mit Hilfe einer Getränkeherstellungsmaschine, wobei die Portionskapsel (10) ein Basiselement (12) mit einem Hohlraum (20) zum Aufnehmen eines Getränkerohmaterials und einen den Hohlraum (20) verschließenden Kapseldeckel (33) aufweist, wobei das Basiselement (12) einen Kapselboden (22), einen umlaufenden Flansch (26) und eine sich von dem Kapselboden (22) zum umlaufenden Flansch (26) erstreckende Kapselwandung (14) umfasst, wobei der Kapseldeckel (33) an dem Flansch (26) befestigt ist, wobei die Portionskapsel (10) ein insbesondere von einem Detektor der Getränkeherstellungsmaschine optisch detektierbares Merkmal (34) aufweist, wobei das optisch detektierbare Merkmal (34) auf einer dem Flansch (26) abgewandten Seite des Kapseldeckels (33) angeordnet ist, **dadurch gekennzeichnet, dass** der Flansch (26) und der Kapseldeckel (33) zumindest im Bereich des optisch detektierbaren Merkmals optisch transparent ausgebildet sind.

2. Portionskapsel (1) nach Anspruch 1, wobei nur ein Randbereich des Kapseldeckels (33) oder der gesamte Kapseldeckel (33) optisch transparent ausgebildet ist.

3. Portionskapsel (1) nach einem der vorhergehenden Ansprüche, wobei zwischen dem Randbereich des Kapseldeckels (33) und dem Flansch (26) eine Klebeschicht angeordnet ist, durch welche der Randbereich und der Flansch (26) stoffschlüssig miteinander verbunden sind, wobei die Klebeschicht optisch transparent ausgebildet ist.

4. Portionskapsel (10) nach einem der vorhergehenden Ansprüche, wobei das optisch detektierbare Merkmal (34) bezogen auf eine Haupterstreckungsebene des Kapseldeckels (33) in einem Randbereich des Kapseldeckels (33) angeordnet ist.

5. Portionskapsel (10) nach einem der vorhergehenden Ansprüche, wobei die Portionskapsel (10) einen Ring (44) aufweist, wobei das optische detektierbare Merkmal (34) auf dem Ring (44) angeordnet, insbesondere aufgedruckt ist, wobei der Ring (44) auf einer dem Flansch (26) abgewandten Seite des Kapseldeckels (33) angeordnet ist, insbesondere auf den Kapseldeckel (33) aufgeklebt ist, wobei der Ring (44) vorzugsweise optisch transparent ausgebildet ist.

6. Portionskapsel (10) nach einem der vorhergehenden Ansprüche, wobei das Basiselement (12) vollständig optisch transparent ausgebildet ist.

7. Portionskapsel (10) nach einem der vorhergehenden Ansprüche, wobei das Basiselement (12) zweiteilig aus einem Basisteil und einem Flanschteil aufgebaut ist, wobei nur das Flanschteil optisch transparent ausgebildet ist, wobei das Basisteil und das Flanschteil miteinander verbunden sind.

8. Portionskapsel (10) nach einem der vorhergehenden Ansprüche, wobei das optisch detektierbare Merkmal (34) ein maschinenauslesbarer Code, vorzugsweise ein eindimensionaler oder mehrdimensionaler Bit- oder Barcode ist.

9. Verwendung einer Portionskapsel (10) nach einem der vorhergehenden Ansprüche zur Zubereitung eines Getränks mit Hilfe einer Getränkeherstellungsmaschine.

## Claims

1. Portion capsule (10) for preparing a beverage with the aid of a beverage production machine, wherein the portion capsule (10) has a base element (12) with a cavity (20) for receiving a raw beverage material and a capsule lid (33) closing the cavity (20), wherein the base element (12) comprises a capsule base (22), a circumferential flange (26) and a capsule wall (14) extending from the capsule base (22) to the circumferential flange (26), wherein the capsule lid (33) is attached to the flange (26), wherein the portion capsule (10) has a feature (34) which can be optically detected, in particular by a detector of the beverage production machine, wherein the optically detectable feature (34) is arranged on a side of the capsule lid (33) facing away from the flange (26), **characterised in that** the flange (26) and the capsule lid (33) are optically transparent at least in the region of the optically detectable feature.

2. portion capsule (1) according to claim 1 , wherein only an edge region of the capsule lid (33) or the entire capsule lid (33) is optically transparent.

3. portion capsule (1) according to one of the preceding claims, wherein an adhesive layer is arranged between the edge region of the capsule lid (33) and the flange (26), by means of which adhesive layer the edge region and the flange (26) are bonded to one another in a material-locking manner, wherein the adhesive layer is optically transparent.

4. portion capsule (10) according to one of the preceding claims, wherein the optically detectable feature (34) is arranged in an edge region of the capsule lid (33) with respect to a main plane of extension of the capsule lid (33).

5. portion capsule (10) according to one of the preceding claims, wherein the portion capsule (10) has a ring (44), wherein the optically detectable feature (34) is arranged, in particular printed, on the ring (44), wherein the ring (44) is arranged on a side of the capsule lid (33) facing away from the flange (26), in particular is glued onto the capsule lid (33), wherein the ring (44) is preferably optically transparent.

6. portion capsule (10) according to one of the preceding claims, wherein the base element (12) is completely optically transparent.

7. portion capsule (10) according to one of the preceding claims, wherein the base element (12) is constructed in two parts from a base part and a flange part, wherein only the flange part is optically transparent, wherein the base part and the flange part are connected to one another.

8. portion capsule (10) according to one of the preceding claims, wherein the optically detectable feature (34) is a machine-readable code, preferably a one-dimensional or multidimensional bit or bar code.

9. use of a portion capsule (10) according to one of the preceding claims for the preparation of a beverage by means of a beverage making machine.

## Revendications

1. Capsule à portions (10) pour la préparation d'une boisson au moyen d'une machine de fabrication de boissons, la capsule à portions (10) comprenant un élément de base (12) avec une cavité (20) pour recevoir une matière première de boisson et un couvercle de capsule (33) fermant la cavité (20), l'élément de base (12) comprenant un fond de capsule (22), un rebord périphérique (26) et une paroi de capsule (14) s'étendant du fond de capsule (22) au rebord périphérique (26), le couvercle de capsule (33) étant fixé à la bride (26), la capsule de portion (10) présentant une caractéristique (34) détectable optiquement, en particulier par un détecteur de la machine de fabrication de boissons, la caractéristique (34) détectable optiquement étant disposée sur un côté du couvercle de capsule (33) opposé à la bride (26), **caractérisé en ce que** la bride (26) et le couvercle de capsule (33) sont réalisés de manière transparente optiquement au moins dans la zone de la caractéristique détectable optiquement.

2. capsule-portion (1) selon la revendication 1, dans laquelle seule une zone de bordure du couvercle de capsule (33) ou l'ensemble du couvercle de capsule (33) est réalisé de manière optiquement transparente.

3. capsule de portion (1) selon l'une des revendications précédentes, dans laquelle une couche adhésive est disposée entre la zone de bord du couvercle de capsule (33) et la bride (26), par laquelle la zone de bord et la bride (26) sont reliées entre elles par une liaison de matière, la couche adhésive étant réalisée de manière optiquement transparente.

4. capsule de portion (10) selon l'une des revendications précédentes, dans laquelle la caractéristique optiquement détectable (34) est disposée dans une zone de bord du couvercle de capsule (33) par rapport à un plan d'extension principal du couvercle de capsule (33).

5. capsule de portion (10) selon l'une des revendications précédentes, la capsule de portion (10) présentant un anneau (44), la caractéristique optique détectable (34) étant disposée sur l'anneau (44), en particulier imprimée, l'anneau (44) étant disposé sur un côté du couvercle de capsule (33) opposé à la bride (26), en particulier étant collé sur le couvercle de capsule (33), l'anneau (44) étant de préférence réalisé de manière optiquement transparente.

6. Capsule de portionnement (10) selon l'une quelconque des revendications précédentes, dans laquelle l'élément de base (12) est entièrement transparent du point de vue optique.

7. Capsule de portionnement (10) selon l'une quelconque des revendications précédentes, dans laquelle l'élément de base (12) est constitué de deux parties, une partie de base et une partie de bride, dans laquelle seule la partie de bride est réalisée de manière optiquement transparente, la partie de base et la partie de bride étant reliées l'une à l'autre.

8. Capsule de portionnement (10) selon l'une des revendications précédentes, dans laquelle la caractéristique optiquement détectable (34) est un code lisible par une machine, de préférence un code binaire ou un code à barres unidimensionnel ou multidimensionnel.

9. Utilisation d'une capsule-portion (10) selon l'une des revendications précédentes pour la préparation d'une boisson à l'aide d'une machine de fabrication de boissons.
